# EUROPEAN PATENT APPLICATION

(11) **EP 2 838 187 A2**
(43) Date of publication of application: **18.02.2015**
(21) Application number: 14178870.3
(22) Date of filing: 29.07.2014
(51) Int. Cl.: H02M 3/337

(54) **Resonant converter and method of operating the same**

(30) Priority: 13.08.2013 US 201313965771
(71) Applicant: Delphi Technologies, Inc., Troy MI 48007 (US)
(72) Inventor: Zhao, Judong, Oxford, MI 48371 (US); Sriram, Tillasthanam V., Carmel, IN 46032 (US)
(74) Representative: Neill, Andrew Peter

(57) **Abstract**

A LLC resonant converter (10) that includes a plurality of electronic switches (12A) arranged to form a bridge (114) and a controller (16). The bridge (114) is operable to an operating mode that includes a full-bridge (114) mode and a half-bridge (114) mode. The controller (16) is configured to adjust an operating frequency (24) used to operate the bridge (114) based on a comparison of a set-point value (20) to an output value (22) of an output voltage (22) generated by converter (10), change the operating mode to the half-bridge (114) mode if the operating mode is the full-bridge (114) mode, an output current (28) of the converter (10) is less than a minimum current threshold (30), and the operating frequency (24) is greater than a maximum frequency threshold (32), and change the operating mode to the full bridge (114) mode if the operating mode is the half-bridge (114) mode, and the operating frequency (24) is less than a minimum frequency threshold (34).

## Description

### TECHNICAL FIELD OF INVENTION

This disclosure generally relates to LLC resonant converters, and more particularly relates to changing an operating mode of a converter to a half-bridge mode and a full-bridge mode based on the output load of the converter.

### BACKGROUND OF INVENTION

Resonant type converters are used for automotive battery chargers to maximize efficiency during charging. Preferably, a single charger design can be used on various vehicles with different battery voltage charging requirements and over a wide range of supply voltages. Unfortunately, most resonant converters are only able to operate with high efficiency over a limit range of output voltage and charging current.

### SUMMARY OF THE INVENTION

In accordance with one embodiment, a method of operating a LLC resonant converter is provided. The converter is configured to control an output voltage based on an operating frequency of the converter, and is operable to select as an operating mode a full-bridge mode and a half-bridge mode. The method includes adjusting the operating frequency of the converter based on a comparison of a set-point value to an output value of an output voltage generated by converter. The method also includes changing the operating mode to the half-bridge mode if the operating mode is the full-bridge mode, an output current of the converter is less than a minimum current threshold, and the operating frequency is greater than a maximum frequency threshold. The method also includes changing the operating mode to the full bridge mode if the operating mode is the half-bridge mode, and the operating frequency is less than a minimum frequency threshold.

In another embodiment, a LLC resonant converter is provided. The converter includes a plurality of electronic switches arranged to form a bridge and a controller. The bridge is operable to an operating mode that includes a full-bridge mode and a half-bridge mode. The controller is configured to adjust an operating frequency used to operate the bridge based on a comparison of a set-point value to an output value of an output voltage generated by converter. The controller is also configured to change the operating mode to the half-bridge mode if the operating mode is the full-bridge mode, an output current of the converter is less than a minimum current threshold, and the operating frequency is greater than a maximum frequency threshold. The controller is also configured to change the operating mode to the full bridge mode if the operating mode is the half-bridge mode, and the operating frequency is less than a minimum frequency threshold.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a schematic diagram of a LLC resonant converter in accordance with one embodiment;
Fig. 2 is a flowchart of a method of operating the LLC resonant converter of Fig. 1 in accordance with one embodiment; and
Fig. 3 is a schematic diagram of a LLC resonant converter in accordance with one embodiment.

### DETAILED DESCRIPTION

Described herein is a DC-DC converter and method of operating the same that uses an inductor/inductor/capacitor (LLC) configuration. Such converters are often used for charging a battery of various configurations of electric vehicles. Typically, these chargers include a unity power factor front end converter, followed by a DC-DC converter that matches the charger output to the battery being charged. While resonant converters normally exhibit higher efficiency compared to traditional hard-switched converters, their operating load range is limited. At light loads or over wide input or output voltage ranges, it is difficult to maintain high efficiency. Lower efficiency includes higher internal power loss, which requires additional provisions in the design for heat dissipation. While this may not be viewed as a significant problem for battery chargers tailored to specific supply and battery voltages, vehicle manufacturers (OEM's) prefer a single charger usable on various multiple vehicles with different battery systems and operable at a wide range of supply voltages (e.g. 110VAC to 240VAC). Described herein is a way to operate a LLC type resonant converter in a manner to increase conversion efficiencies at a wide range of supply voltages, output voltages, and output currents that would otherwise be inefficient with prior charger configurations.

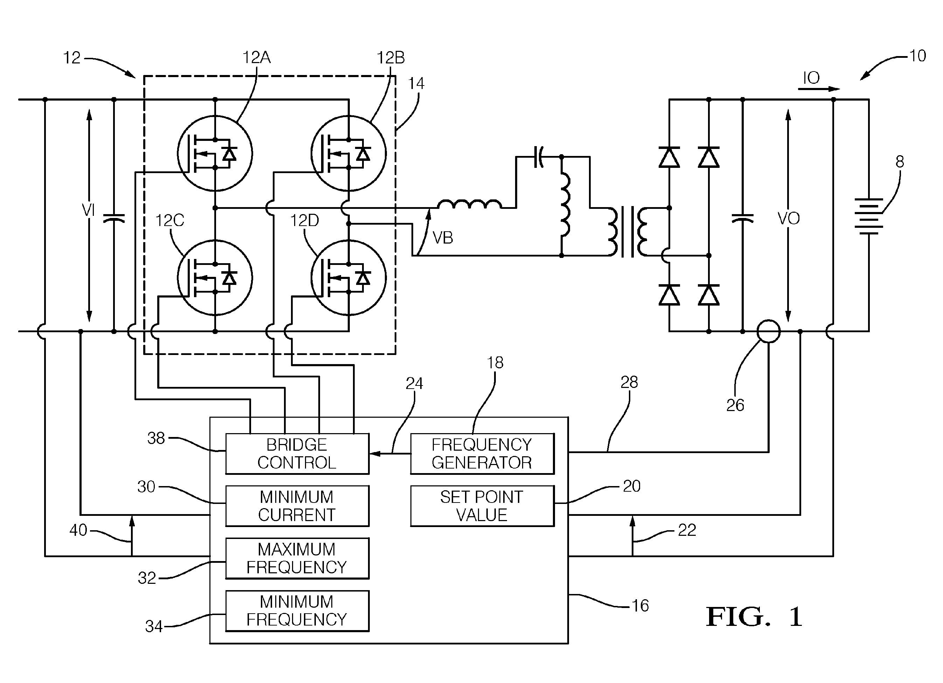

Fig. 1 illustrates a non-limiting example of a LLC resonant converter, hereafter often referred to as the converter 10. In this example the converter 10 is shown charging a battery 8. However it is recognized that instead of the converter 10 being a battery charger the converter 10 may be used as a general purpose power supply for any electrical load instead of the battery 8 or in parallel with the battery 8. In general, the converter includes a plurality of electronic switches 12A, 12B, 12C, and 12D; hereafter sometimes referred to as the switches 12. The switches 12 are generally arranged to form a bridge 14, a well-recognized configuration for switch-mode operation. In this example the electronic switches are metal-oxide-semiconductor-field-effect-transistors (MOSFETs). However, other devices may be suitable such as bipolar-junction-transistors (BJTs) or insulated-gate-bipolar-transistors (IGBTs). As will be recognized by those in the art, the bridge 14 is operable to operating modes that include a full-bridge mode and a half-bridge mode. As such, it will be recognized that while operating in full-bridge mode, the output of the bridge VB alternates between +VI and -VI, and while operating in the half-bridge mode, VB alternates half of that range, e.g. between zero (0) and +VI or between zero (0) and -VI. While not specifically illustrated, the supply voltage VI is typically a rectified alternating current (AC) type signal such as a rectified 110VAC or 220VAC type supply commonly associated with building electrical power distribution or the output of a power factor controller.

The converter 10 may include a controller 16. The controller 16 may include a processor (not shown) such as a microprocessor or other control circuitry as should be evident to those in the art. The controller 16 may include memory (not shown), including non-volatile memory, such as electrically erasable programmable read-only memory (EEPROM) for storing one or more routines, thresholds and captured data. The one or more routines may be executed by the processor to perform steps for determining or measuring signals received by the controller 16 for operating the bridge 14 as described herein. In general, the controller 16 is configured to adjust an operating frequency 24 output by a frequency generator 18 used to operate the bridge 14 based on a comparison of a set-point value 20 to an output value 22 of an output voltage generated by converter. The set point value 20 may be one of many variables or thresholds stored in memory of the controller 16, and would be determined based on the charging voltage of the battery 8 or the desired output voltage VO of the converter 10. The converter 10 may also include a current sensor 26 configured to indicate an output current 28 to the controller 16. The current sensor 26 may include a sense resistor (not shown) or a Hall effect device (not shown) as is well known in the current sensing arts. A wide variety of suitable current sensors are commercially available.

A description of how varying the operating frequency influences the gain of full-bridge converters and half-bridge converters is provided in United States Patent 8,242,754 issued to Yang on August 14, 2012 and United States Application Publication 2012/0163038 by Park et al. published June 28, 2012, respectively. These references illustrate example Voltage Gain |Vₒ/Vᵢₙ| curves for an LLC converter that peak at a resonant frequency f0. Converters are typically operated at an operating frequency at or above the resonant frequency f0 to ensure soft or zero-voltage switching. At reduced output voltages and reduced loads, the operating frequency of the converter may be undesirably high and may lead to switching losses and radiated emissions. It has been reported in several papers that the observed Gain curves tend to deviate from the idealized "ac fundamental" curves shown when operating at high frequencies necessary for low output current loads. Sometimes these frequencies may exceed the design capability of the converter or lead to excessive core loss in the magnetic or the converter is unable to regulate at these lower voltages when the load is substantially reduced. To overcome some of these limitations at some reduced output voltages and reduced load (low output power), a way is proposed that shifts the operating point in the gain curve to a region where the efficiencies can be higher.

Prior converters that operated in only a half-bridge mode or only a full-bridge mode have limited ranges of operation where the efficiency is acceptably high. Accordingly, the converter 10 described herein switches between the half-bridge mode and the full-bridge mode in order to operate at maximum efficiency. As such, the converter 10 is further configured to change the operating mode to the half-bridge mode if the operating mode is the full-bridge mode, the output current 28 of the converter 10 is less than a minimum current threshold 30, and the operating frequency 24 is greater than a maximum frequency threshold 32. Furthermore, the converter 10 is further configured to change the operating mode to the full bridge mode if the operating mode is the half-bridge mode, and the operating frequency is less than a minimum frequency threshold 34.

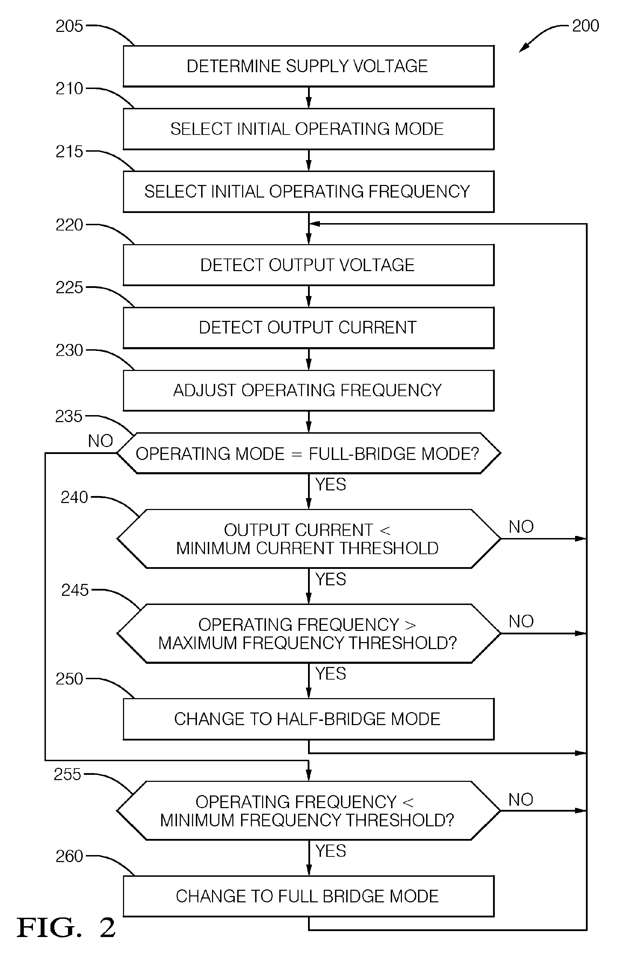

Fig. 2 illustrates a non-limiting example of a method 200 of operating a LLC resonant converter (i.e. the converter 10), where the converter 10 is configured to control an output voltage 22 (VO) based on an operating frequency 24 of the converter 10. As noted above, the converter 10 is operable to select as an operating mode a full-bridge mode and a half-bridge mode. The method 200 described in more detail below provides a way to control the switching of the operating mode in order to provide better converter efficiency when compared to converters that can only operate in the half-bridge mode or the full-bridge mode.

Step 205, DETERMINE SUPPLY VOLTAGE, may include the controller 16 measuring the supply voltage or input voltage VI using an analog-to-digital converter (ADC, not shown) built into the controller 16. As such, Step 205 includes determining an input value 40 of a supply voltage VI present at an input of the converter when the supply voltage is initially applied to the converter 10.

Step 210, SELECT INITIAL OPERATING MODE, may include selecting the full bridge mode if the supply voltage VI is relatively low, 90VAC to 165VAC for example, and selecting the half-bridge mode if the supply voltage VI is relatively high, 165VAC to 260VAC for example. By way of further example and not limitation, if the supply voltage VI is less than 90VAC or greater than 260VAC, the controller may be configured to not operate.

Step 215, SELECT INITIAL OPERATING FREQUENCY, may include selecting an initial operating from a look-up table or based on prior operating history. The initial operating frequency may also be influenced by the operating mode selected. Since the electrical load on the converter 10 at startup is generally unknown, an initial guess is made, and the steps that follow optimize the operation of the converter 10 to maximize efficiency.

Step 220, DETECT OUTPUT VOLTAGE, may include the controller 16 measuring the output voltage VO using an analog-to-digital converter (ADC, not shown) built into the controller 16.

Step 225, DETECT OUTPUT CURRENT, may include the controller 16 measuring the output current IO using an analog-to-digital converter (ADC, not shown) built into the controller 16 in conduction with the current sensor 26.

Step 230, ADJUST OPERATING FREQUENCY, may include increasing the operating frequency 24 if the output voltage VO is greater than the set point value 20, and decreasing the operating frequency 24 if the output voltage VO is less than the set point value 20. As such, Step 230 includes adjusting the operating frequency 24 of the converter 10 based on a comparison of a set-point value 20 to an output value 22 of an output voltage VO generated by converter 10.

Step 235, OPERATING MODE = FULL-BRIDGE MODE?, may include proceeding to Step 240 if the converter is operating the full-bridge mode (YES), and proceeding to Step 255 if the converter 10 is operating in the half-bridge mode (NO).

Step 240, OUTPUT CURRENT < MINIMUM CURRENT THRESHOLD?, may include comparing a value or amount corresponding to the output current 28 (IO) with the minimum current threshold 30, which may be stored in the controller 16. If the output current 28 is less than the minimum current threshold (YES), then it may be an indication that the battery 8 is close to being fully charged and it may be suitable to change the operating mode to the half bridge mode. If the output current 28 is greater than the minimum current threshold 30 (NO), then it may be an indication that the battery 8 is not fully charged and so the full-bridge mode should be maintained in order to rapidly charge the battery 8.

Step 245, OPERATING FREQUENCY > MAXIMUM FREQUENCY THRESHOLD?, may include comparing a value or amount corresponding to the operating frequency 24 to the maximum frequency threshold 32, which may be stored in the controller 16. If the operating frequency 24 is greater than the maximum frequency threshold 32 (YES), then that may be an indication that a sufficient output voltage VO may be generated using the half-bridge mode, and so the method 200 proceeds to step 250. If NO, the method 200 loops back to step 220 to repeat the control loop while remaining in the full-bridge mode. It is recognized that the order that steps 240 and 245 are executed may be reversed to provide an alternative behavior of the converter 10.

Step 250, CHANGE TO HALF-BRIDGE MODE, may include sending a message to the bridge control unit 38 or altering a control line state of the bridge control unit 38 to change the operating mode of the converter 10 to the half-bridge mode. The combination of Steps 240, 245, and 250 include changing the operating mode to the half-bridge mode if the operating mode is the full-bridge mode, an output current 28 of the converter 10 is less than a minimum current threshold 30, and the operating frequency 24 is greater than a maximum frequency threshold 32.

Step 255, OPERATING FREQUENCY < MINIMUM FREQUENCY THRESHOLD?, is executed if the converter 10 is operating in the half-bridge mode. If the desired output voltage (i.e. set point value 20) is such that an undesirably low operating frequency is necessary, then operating in the full-bridge mode may be preferable. If NO, then the method 200 returns to step 220. If YES, then the method 200 proceeds to step 260.

Step 260, CHANGE TO FULL BRIDGE MODE, may include sending a message to the bridge control unit 38 or altering a control line state of the bridge control unit 38 to change the operating mode of the converter 10 to the full-bridge mode. As such, Steps 255 and 260 combined includes changing the operating mode to the full bridge mode if the operating mode is the half-bridge mode, and the operating frequency is less than a minimum frequency threshold.

Preferably, the maximum frequency threshold 32 is greater than the minimum frequency threshold 34 by a hysteresis amount to avoid rapid switching between the half-bridge mode and the full-bridge mode.

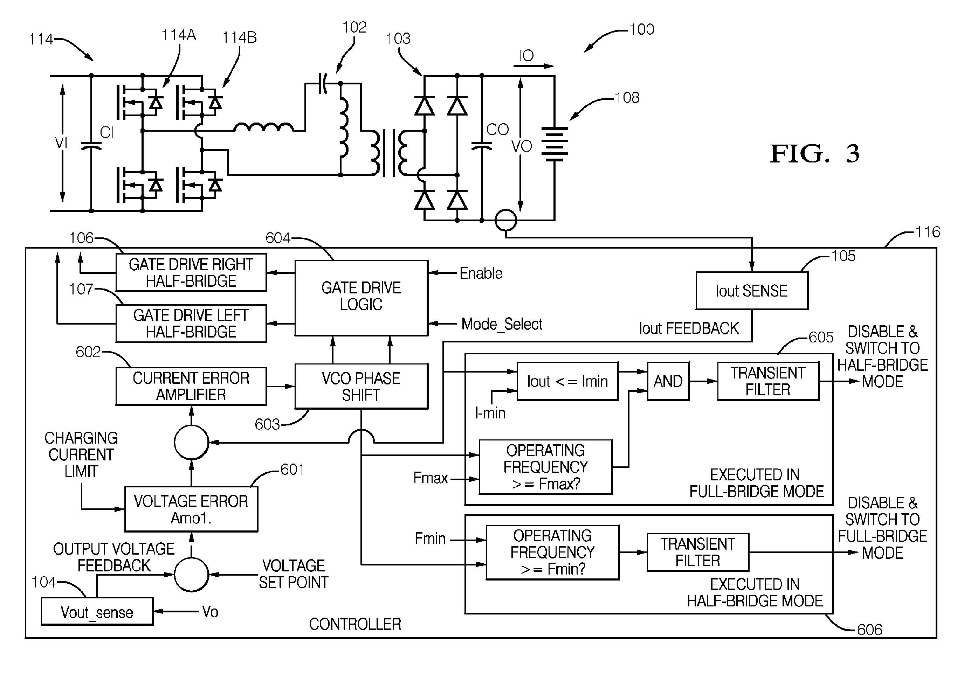

Fig. 3 is another non-limiting example of a LLC DC-DC converter stage, referred to hereafter as the converter 100. The input side includes a bridge 114 formed by four switches, shown here as MOSFETs which are switched so that the diagonal elements conduct at the same time. The output of the bridge 114 is an AC square wave which is fed to the resonant circuit 102 comprising of inductor LS and capacitor CS which are in series with transformer T1. The output stage includes diode bridge 103 and output filter cap CO, which are connected to the secondary windings of the transformer T1. Output voltage Vo is fed to the battery 108, and is controlled by means of varying the switching frequency of the four switches forming the bridge 114.

Fig. 3 further illustrates details of the converter 100 as including two half Bridges: left half bridge 114A and right half bridge 114B, a resonant circuit 102, transformer T1 and output rectifier and filter 103. Additional hardware blocks shown are voltage Sense and scaling 104, output current sense "Iout-Sense" 105, Gate Drive blocks 106 and 107. The various blocks may be implemented either in hardware or as part of a microprocessor / DSP controller.

The basic DC-DC regulator function is represented by a voltage error amplifier 601, followed by a current error amplifier 602. The output of the current error amplifier adjusts the operating frequency of the LLC by means of a Voltage-Controlled Oscillator or equivalent software based frequency generator. In addition, this block includes a Phase-Shift mode that could allow operation of the LLC in full-bridge mode to lower power levels without a large increase in operating frequency. This DC-Dc regulator function is only representative of a classical converter control system and it will be obvious to those practicing in this field that other implementations using non-linear control, feed forward etc. are possible. Two addition control blocks are shown, 605 and 606. 605 is the logic that is executed or implemented when the DC-DC is operating in Full-Bridge mode. 605 has been calibrated based on the converter characteristics to set the maximum operating frequency, Fmax and also the minimum output current permissible in this condition. When these conditions are met, this section of the control will instruct the controller to switch to the Half bridge mode. This is carried out by filtering out transient conditions and ensuring that conditions are relatively steady state before this transition.

Similarly block 606 is executed when the Charger is operating in the half-Bridge Mode. A predetermined minimum frequency of operation Fmin is used as a trigger to determine when to transition to Full-Bridge mode. This is again accomplished after ensuring that transient conditions do not lead to transitions.

Accordingly, a converter 10 and a method 200 of operating the converter 10 is provided. Operating efficiency of the converter 10 is maximized by varying the operating frequency used to modulate the bridge 14, and by switching between half-bridge operation and full-bridge operation.

While this invention has been described in terms of the preferred embodiments thereof, it is not intended to be so limited, but rather only to the extent set forth in the claims that follow.

## Claims

1. A method (200) of operating a LLC resonant converter (10), wherein the converter (10) is configured to control an output voltage (22) based on an operating frequency (24) of the converter (10), and is operable to select as an operating mode a full-bridge (114) mode and a half-bridge (114) mode, said method (200) comprising:
adjusting (230) the operating frequency (24) of the converter (10) based on a comparison of a set-point value (20) to an output value (22) of an output voltage (22) generated by converter (10);
changing (250) the operating mode to the half-bridge (114) mode if the operating mode is the full-bridge (114) mode, an output current (28) of the converter (10) is less than a minimum current threshold (30), and the operating frequency (24) is greater than a maximum frequency threshold (32); and
changing (260) the operating mode to the full bridge (114) mode if the operating mode is the half-bridge (114) mode, and the operating frequency (24) is less than a minimum frequency threshold (34).

2. The method (200) in accordance with claim 1, wherein the method (200) further comprises
determining (205) an input value (40) of a supply voltage present at an input of the converter (10) when the supply voltage is initially applied to the converter (10); and
selecting (210) an initial operating mode as the full-bridge (114) mode or the half-bridge (114) mode based on the input value (40).

3. The method (200) in accordance with claim 1 or 2, wherein the maximum frequency threshold (32) is greater than the minimum frequency threshold (34) by a hysteresis amount.

4. A LLC resonant converter (10), said converter (10) comprising:
a plurality of electronic switches (12A) arranged to form a bridge (114), said bridge (114) operable to an operating mode that includes a full-bridge (114) mode and a half-bridge (114) mode; and
a controller (16) configured to
adjust an operating frequency (24) used to operate the bridge (114) based on a comparison of a set-point value (20) to an output value (22) of an output voltage (22) generated by converter (10),
change the operating mode to the half-bridge (114) mode if the operating mode is the full-bridge (114) mode, an output current (28) of the converter (10) is less than a minimum current threshold (30), and the operating frequency (24) is greater than a maximum frequency threshold (32), and
change the operating mode to the full bridge (114) mode if the operating mode is the half-bridge (114) mode, and the operating frequency (24) is less than a minimum frequency threshold (34).
